# EUROPEAN PATENT APPLICATION

(11) **EP 1 785 560 A2**
(43) Date of publication of application: **16.05.2007**
(21) Application number: 06255747.5
(22) Date of filing: 08.11.2006
(51) Int. Cl.: E05B 47/00, E05B 53/00, E05B 65/12, H02K 7/06

(54) **Drive mechanism**

(30) Priority: 09.11.2005 GB 0522794
(71) Applicant: ArvinMeritor Light Vehicle Systems (UK) Ltd, Birmingham, West Midlands, B30 3BW (GB)
(72) Inventor: Benoit, Dominique, 25420 Bart (FR); Spurr, Nigel V., Shirley, Solihull B90 2PS (GB); Scott, Paul Geoffrey, Solihull, West Midland B90 1LE (GB)
(74) Representative: Jones, John Bryn

(57) **Abstract**

A drive mechanism for a power closure latch, comprising: a latch chassis and a power actuator fixed to the chassis; a resilient means having a base at a first end and engaging a drive member at a second end, the base being fixed to the chassis and the drive member being driveable by the power actuator to compress the resilient means; a toggle arm having an input and an output, the input driveable by the drive member to toggle the output between first and second positions; a second arm having a pivot fixed to the chassis at a first end and an input at a second end for attachment to the drive member, in which driving of the drive member by the power actuator to move the output from its first position to its second position causes compression of the resilient means, and driving of the drive member by the power actuator to move the output from its second position to its first position to deliver an output load for driving an associated power closure latch is assisted by a spring load generated by expansion of the resilient means.

## Description

The following invention relates to latches, and in particular, but not exclusively to vehicle door power closure latches.

The refinement of modern passenger vehicle interiors is becoming increasingly important to the vehicle's passengers. Accordingly, manufacturers are placing an increasing importance on the isolation of the passenger cabin from outside environmental factors such as noise, vibration and ambient temperature. In order to isolate the cabin interior from the environmental factors the door seal pressure has increased steadily in recent years.

The increase in seal pressure has led to conventional manual closing of the door placing an unacceptable load requirement on the door operator. A solution to this problem is to provide a latch which includes a power driven latch bolt which drives the latch from a first safety condition (or intermediate condition) to a fully closed condition without the need for assistance from the operator.

The term first safety, or intermediate, is used to denote the latch condition achieved when the operator has pushed the door towards the closed position to engage the latch with a door striker, but not achieved complete closure of the door. In this position, the door is not fully closed, but the door cannot be opened without operating the latch.

In a power closure latch, the power required during the closure stroke (the stroke in which the motor drives the latch both from the intermediate position to the closed position) is greater than the power required during the return stroke (the stroke in which the motor is returned to a rest position, in readiness for the next closure of the door). This means that in order to close the latch the motor must be sufficiently powerful to overcome both the seal load and the friction in the latch mechanism. On the return stroke, the motor only needs to overcome the friction in the latch mechanism. The return stroke therefore requires significantly less power than that required to overcome the seal load in the closure stroke. The result is that the motor is only using its full power for half of the latch closure/return cycle and power is therefore available during the return stroke that is not used.

It is known, for example in EP0325464.7 and EP01300813.1, to use the power available during the return stroke to store energy in a spring, which energy can be released in order to assist the motor during the closure stroke.

EP'464 uses a leaf spring mounted on the latch chassis to act on an abutment on a gear wheel. The gear wheel is driven by an electric motor, and drives the latch bolt via a series of gears. EP'813 similarly employs a spring, in this case a coil spring, to apply an assistance load to a gear wheel via an output. The gear wheel is driven by an electric motor, and the output acts on the latch bolt to close the latch.

It will be appreciated, the greatest load reacted by the motor during the closure stroke occurs towards the end of the stroke, where the compression of the seal generates the largest resistance to the closure of the door. In contrast, a spring compressed in the return stroke, provides the greatest assistance to the motor at the beginning of the closure stroke when compression of the spring is at its greatest. In the prior art devices cited above, the spring is in its least compressed state towards the end of the closure stroke, and accordingly the load available to assist the motor is at its lowest. The spring assist load and motor load are therefore poorly matched to provide the most efficient use of the motor power.

It is an object of the current invention to overcome or at least mitigate the above problem.

According to the present invention there is provided a drive mechanism for a power closure latch, comprising:-
a latch chassis,
a power actuator fixed to the chassis,
a resilient means having a base at a first end and engaging a drive member at a second end,
the base being fixed to the chassis and the drive member being driveable by the power actuator to compress the resilient means,
a toggle arm having an input and an output, the input driveable by the drive member to toggle the output between first and second positions in a first direction,
driving of the drive member by the power actuator to move the output from its first position to its second position causes compression of the resilient means in a second direction,
driving of the drive member by the power actuator to move the output from its second position to its first position to deliver an output load for driving an associated power closure latch is assisted by a spring load generated by expansion of the resilient means, wherein the second direction is arranged substantially perpendicular to the first direction so as to generate a mechanical advantage between the spring load and a spring assist component of the output load.

The invention will now be disclosed, by way of example only, and with reference to the following drawings, in which:
Figure 1 is a schematic representation of a mechanism according to the present invention shown in the open or rest position,
Figure 2 is a schematic representation of the mechanism of figure 1, shown in the closed or actuated position,
Figure 3 is a schematic representation of a second embodiment of mechanism according to the present invention, shown in the open or rest position,
Figure 4 is a schematic representation of the mechanism of figure 3, shown in the closed or actuated position,
Figure 5 is a chart showing a diagrammatic representation of the assist load of a known power closure latch and the assist load of the present invention, for comparison.

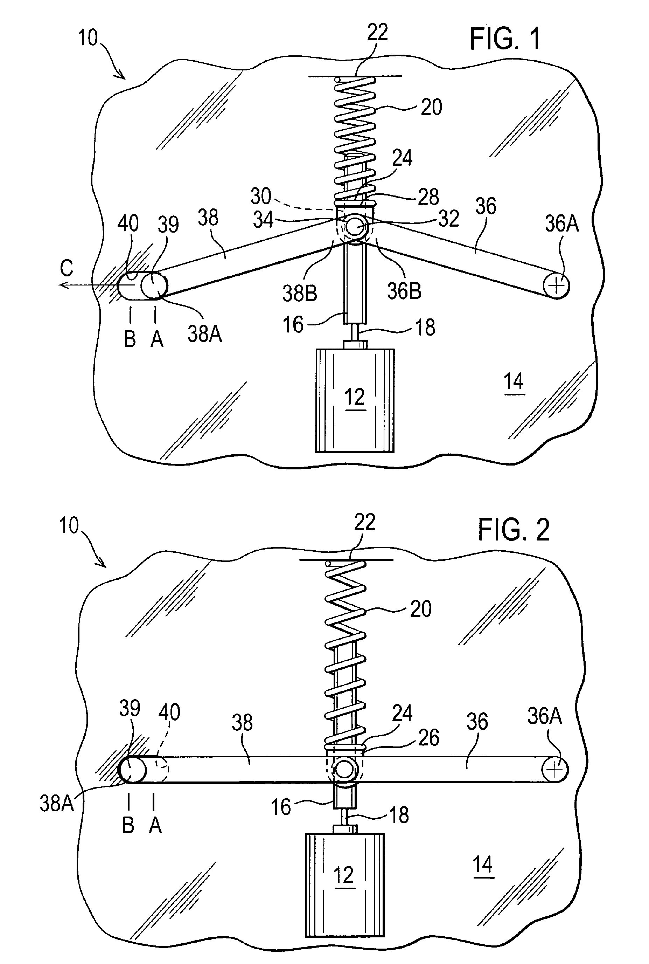

Referring to figures 1 and 2, and in particular figure 1, a drive mechanism 10 has a power actuator in the form of electric motor 12. The electric motor 12 is mounted on a mechanism chassis indicated schematically at 14 so as to allow a degree of movement between the latch chassis and the motor, the purpose of which will be described further shortly. Such movement is permitted by mounting the motor 12 using bushes (not shown for clarity) or other known deformable system.

The electric motor 12 drives a screw in the form of an externally threaded rod 16 by way of shaft 18. Whilst in this embodiment the motor 12 directly drives the externally threaded rod 16 by the shaft 18, it is conceivable within the scope of the invention that the externally threaded rod 16 be driven by the electric motor 12 by way of a series of gears, or similar drive transferring means. At an opposite end of the mechanism chassis 14 to electric motor 12, is mounted a resilient means in the form of spring 20. The spring 20 is fixed at its base 22 to the latch chassis 14. A second end 24 of the spring 22 abuts a nut 26. It will be appreciated that the threaded rod 16 acts as a guide for the spring 20 so as to stabilise the spring in use.

The nut 26 defines at its upper end a spring seat 28 against which the second end 24 of the spring 20 sits. Radially inwardly of the spring seat 28 is a threaded bore 30 which is in threaded engagement with the worm gear 16. The nut 26 has an outwardly facing surface 32 which defines a pivot 34 which receives a support arm 36 and a toggle arm 38 as will be described in further detail shortly. It is conceivable within the scope of the invention that the pivot be arranged to act in a slot in the nut. An elongate axis of the slot is arranged at 90 degrees to the compression axis of the spring. In this way the pivot is able to move laterally with respect to the nut. The purpose of this alternative will be described in further detail shortly. Both forms of the nut 26 make a link joint between the spring 20, the support arm 36 and the toggle arm 38.

The support arm 36 has a first end 36A mounted for rotation on the chassis 14. A second end 36B of the support arm 36 is mounted on the pivot 34 for rotation therewith.

A first end 38A of the toggle arm 38 defines an output 39 which is arranged to act in a slot 40. In the embodiments disclosed herein the slot is defined by the latch chassis 14. However, it is clearly possible within the scope of the invention, that the slot 40 be defined by components other than the latch chassis 14, so long as those components are fixed relative to the latch chassis 14. The second end 38B of the toggle arm is mounted, along with the second end 36B of the support arm, on the nut pivot 34.

In use the drive mechanism 10 forms part of a power closure vehicle door latch. The output 39 is provided to operate a power closure latch bolt (not shown for clarity). The output 39 is capable of moving the latch bolt from a first safety position to a fully closed position and can be arranged either to drive the latch bolt directly, or via a mechanism.

Referring now to figures 1 and 2 for comparison, it will be appreciated that the output 39 of the toggle arm is in a first position A in figure 1, and in a second position B in figure 2. In toggling between the first position A and the second position B, the output 39 of the toggle arm 38 has moved along the slot 40 in a direction of movement C.

Operation of the latch mechanism is as follows. With the drive mechanism 10 in the figure 1 position, the latch (not shown for clarity) is in either the open condition or the first safety position depending on whether the door has been closed by the operator. In the case where the door is open and is then subsequently closed by the operator, the latch will be moved to the first safety condition, with the latch mechanism 10 still in its rest condition as shown in figure 1. Upon closure of the door to the first safety condition, a signal is sent to a central control unit (CCU) (not shown for clarity), to instruct the motor 12 to close the latch. Upon receipt of the instruction from the CCU, the motor turns which moves the nut 26 down towards the motor 12 as shown in figure 1 under the assistance of the spring 20. Since the first end 36A of the support arm 36 is fixed for rotation on the latch chassis 14, movement of the nut towards the electric motor 12 causes the output 39 to move along the slot 40 from its starting point A towards position B. The output 39 is thereby able to drive the latch bolt from the first safety position to the closed position to close the latch.

This moves the drive mechanism 10 to the position shown in figure 2, where the latch bolt has been driven to the closed position, and the latch is accordingly closed. With the latch in the closed position, the CCU commands the electric motor 12 to stop turning which leaves the nut 26 arranged directly between the pivoted first end 36A of the support arm and the first end 38A of the toggle arm as shown in figure 2.

The motor 12 then drives the nut 26 in order to compress the spring 20 and return the drive mechanism 10 to the rest position as shown in figure 1 ready for the next power closure operation. The nut 26 is retained in that position, against the action of the spring 30, by the friction in the mechanism (principally in the motor 12).

In this manner, whilst load is required to compress the spring 20, this load is delivered by the electric motor 12 on the return stroke when the electric motor 12 is not required to drive the latch bolt to close the latch. The energy stored in the compressed spring is then released during the power closure stroke to assist the motor 12 in driving the latch bolt.

It will be appreciated that since the first end 36A of the support arm 36 and the base 22 of the spring 20 are fixed to the latch chassis, and that the output 39 acts in a slot defined by the latch chassis 14, it will be necessary for the electric motor 12 to be permitted to move relative to the latch chassis 14 when driving the output 39 between its first and second positions. This relative movement is achieved by the provision of mount bushes (not shown for clarity) since the degree of movement between the electric motor 12 and latch chassis 14 is minimal. Alternatively, the motor 12 is fixed rigidly to the chassis 14 and the alternative form of nut is employed as described above. In the alternative construction, the action of the pivot in the slot accommodates the change in geometry allowing the motor to remain stationary.

The invention provides a distinct advantage over known spring assist latches as follows.

As described above, in the drive mechanism 10 of figures 1 and 2, the assistance load generated by the spring is geared by way of its transfer to the latch bolt (not shown for clarity) by the output 39 of the toggle arm 38. The prior art devices however have a linear relationship between the assistance load generated by the spring and the assistance load transferred to the latch bolt. In contrast with the prior art devices, the spring assistance load generated by the spring 20, gains a mechanical advantage by virtue of the arrangement of the toggle arm 38 and support arm 36. Likewise, the drive load applied by the electric motor 12 undergoes a similar mechanical advantage in order to provide the highest load at the end of the closure stroke to match the maximum resistance offered by the seal as it is further compressed towards the closed position.

The mechanism is particularly effective with respect to the spring assistance load generated by the spring 20 at its position shown in figure 2. The spring assistance load generated by the spring 20 is weakest in this position but the mechanism generates a higher output assistance load to be delivered to the output 39.

However, as discussed earlier, the highest seal loads are observed at the end of the power closure stroke as the drive mechanism 10 approaches the closed position. The effect of the toggle arm is to generate the highest output assistance load at the output 39 when the drive mechanism 10 is approaching the closed position.

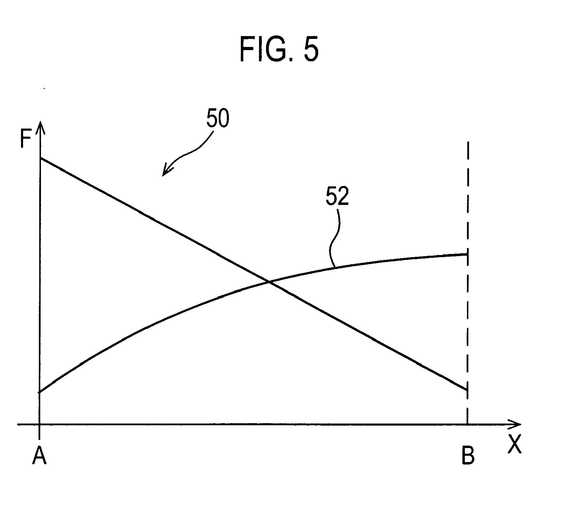

This effect is best observed with reference to the schematic chart shown in figure 5.

In figure 5, the output assistance force generated by the spring 20 as measured at the latch bolt is plotted on the y axis and annotated F and the extension, that is the distance the free end of the spring has displaced from its compressed position, is depicted on the x axis and annotated X.

When X is equal to zero, the spring 20 of the current invention is in its compressed position, and consequently the output 39 is in position A. Position A is therefore marked on the plot in figure 5 where X is equal to zero. When X is at maximum, the spring 20 is in its fully expanded position. Accordingly, the output 39 is in its position B. Position B is therefore marked on the x axis of the plot in figure 5 at a position where X is at a maximum.

A first plot 50 represents the situation where the free end of a spring acts directly on the latch bolt as observed in prior art devices. It will be appreciated that the assistance force decreases linearly as the extension of the spring increases.

A second plot 52 represents the output assistance force generated at the output 39 of the toggle arm 38 of the present invention. It will be appreciated that the action of the toggle arm allows a redistribution of the output assistance force across the extension of the spring 20. In this manner, a relatively high force is generated at the end of extension, where the seal load is at its greatest.

Although it will be appreciated that the plots 50, 52 depicted in figure 5 are not to scale, in theory, the area under each of the first and second plots 50, 52 will be equal, since the energy stored in the spring for a given position of extension will be the same. Accordingly, the toggle mechanism of the current invention provides a redistribution of the release of that energy in the form of an assistance load.

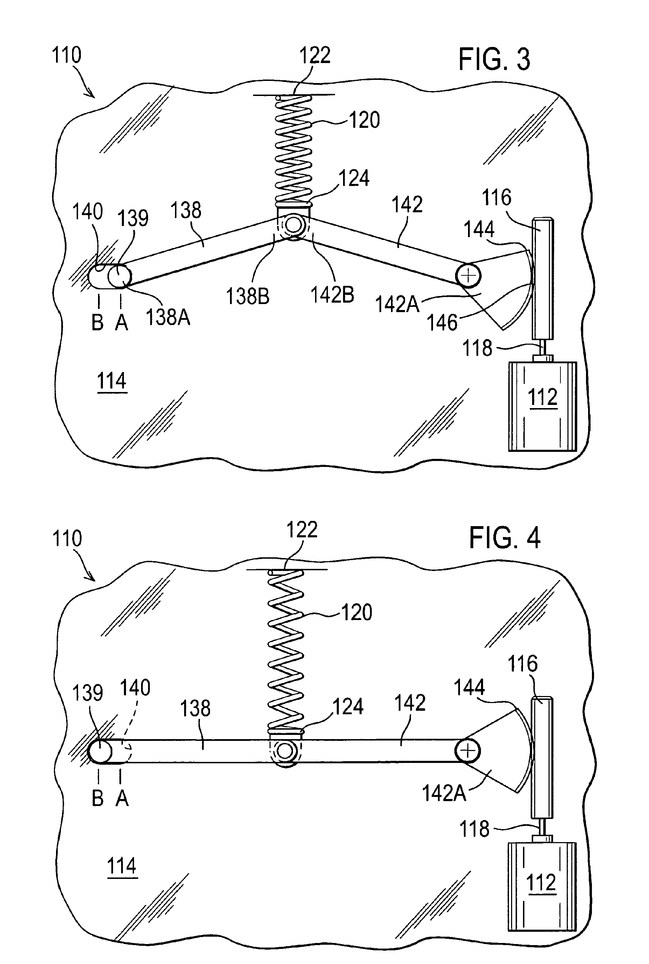

In figure 3, a drive mechanism 110 is shown which includes a motor 112 fixed on a mechanism chassis 114. The electric motor 112 drives a screw in the form of a worm gear 116 via a shaft 118. A spring 120 is provided having a base 122 which is attached to the mechanism chassis 114. A second end 124 of the spring 120 is received by a nut 126 which differs from the nut 26 of the first embodiment in that the nut 126 does not define a threaded bore. The drive mechanism 110 has a toggle arm 138 similar to the toggle arm 38 of the first embodiment. An output 139 of the toggle arm 138 acts in a slot 140 and is moveable therealong between a first position A and a second position B. The nut 126 supports a second end 138B of the toggle arm 138 and a second end 142B of a drive arm 142. A first end 142A of the drive arm 142 defines a drive gear 144 having teeth 146 which engage with the worm gear 116.

As shown in a position of figure 3, the spring 120 is in its fully compressed state, and the drive mechanism 110 is therefore in a position ready to drive the latch bolt (not shown for clarity) from the first safety position to the closed position.

In the second embodiment, the electric motor 112 acts on the drive arm 142 to move the first end 138A of the toggle arm 138 between the positions A and B, instead of acting on the nut 126, as in the first embodiment.

It will be appreciated, that in the drive mechanism 110 of the second embodiment, the motor 112 can be fixed to the latch chassis 114 without the need to provide relative movement therebetween.

Other than in the differences described above, the embodiments of figures 1 and 2 and the embodiment of figures 3 and 4 operate in a similar way, and deliver the advantages of altering the assistance load in a similar way. Consequently, both of the embodiments provide the change in assistance load depicted by the schematic plot of figure 5.

It will be appreciated that the springs 20, 120 are provided as examples of resilient means. In alternative embodiments of the invention, the spring 20, 120 could conceivably be replaced with a rubber bush, gas or air or similar resilient body.

## Claims

1. A drive mechanism for a power closure latch, comprising:-
a latch chassis,
a power actuator fixed to the chassis,
a resilient means having a base at a first end and engaging a drive member at a second end,
the base being fixed to the chassis and the drive member being driveable by the power actuator to compress the resilient means,
a toggle arm having an input and an output, the input driveable by the drive member to toggle the output between first and second positions,
a second arm having a pivot fixed to the chassis at a first end and an input at a second end for attachment to the drive member, in which
driving of the drive member by the power actuator to move the output from its first position to its second position causes compression of the resilient means, and
driving of the drive member by the power actuator to move the output from its second position to its first position to deliver an output load for driving an associated power closure latch is assisted by a spring load generated by expansion of the resilient means.

2. The drive mechanism according to claim 1 wherein the drive member is a nut which is driven by a screw rotated by the power actuator.

3. The drive mechanism according to claim 2 wherein the nut defines link a joint between the toggle arm input, the second arm input, and the resilient means.

4. The drive mechanism according to claim 3 wherein the second arm is a support arm for preventing the drive member from deflecting under the output load.

5. The drive mechanism according to claim 4 wherein the power actuator comprises an electric motor arranged to have its axis of rotation coexistent with a compression/extension axis of the resilient means.

6. The drive mechanism according to claim 5 wherein the electric motor is mounted on a moveable joint.

7. The drive mechanism of any preceding claim wherein the toggle arm input is driveable in a first direction by the drive member to toggle the output between first and second positions, and
the compression of the resilient means is achieved in a second direction,
the second direction being arranged substantially perpendicular to the first direction so as to generate a mechanical advantage between the spring load and a spring load component of the output load.

8. The drive mechanism according to any one of claims 1 to 3 wherein the second arm is a drive arm having a first end pivoted on the chassis and an input at a second end which is connected to the drive member.

9. The drive mechanism according to claim 7 wherein the drive arm further includes a gear portion.

10. The drive mechanism according to claim 8 wherein the power actuator drives a worm gear which in turn drives the gear portion of the drive arm.

11. The drive mechanism according to any preceding claim wherein the resilient means is a coil spring.

12. A drive mechanism for a power closure latch, comprising:-
a latch chassis,
a power actuator fixed to the chassis,
a resilient means having a base at a first end and engaging a drive member at a second end,
the base being fixed to the chassis and the drive member being driveable by the power actuator to compress the resilient means,
a toggle arm having an input and an output, the input driveable in a first direction by the drive member to toggle the output between first and second positions,
driving of the drive member by the power actuator to move the output from its first position to its second position causes compression of the resilient means in a second direction, and
driving of the drive member by the power actuator to move the output from its second position to its first position to deliver an output load for driving an associated power closure latch is assisted by a spring load generated by expansion of the resilient means,
wherein the second direction is arranged substantially perpendicular to the first direction so as to generate a mechanical advantage between the spring load and a spring load component of the output load.

13. A power closure latch having the drive mechanism according to any preceding claim wherein the toggle arm output drives a latch bolt to move the latch bolt from a first safety position to a closed position where the latch bolt retains an associated striker to maintain the latch in a chosen condition.
